(19) Europäisches Patentamt
European Patent Office
Office européen des brevets

(11) Veröffentlichungsnummer: **0 254 799**
**B1**

# (12) EUROPÄISCHE PATENTSCHRIFT

(45) Veröffentlichungstag der Patentschrift: **13.06.90**

(51) Int. Cl.⁵: **C08G 77/38,** C09D 4/00, C08L 83/05

(21) Anmeldenummer: **87103617.4**

(22) Anmeldetag: **12.03.87**

(54) **(Meth)acrylsäureestermodifizierte Organopolysiloxane, Verfahren zu ihrer Herstellung und ihre Verwendung als abhäsive Beschichtungsmassen.**

(30) Priorität: **27.06.86 DE 3621629**

(43) Veröffentlichungstag der Anmeldung: **03.02.88 Patentblatt 88/5**

(45) Bekanntmachung des Hinweises auf die Patenterteilung: **13.06.90 Patentblatt 90/24**

(84) Benannte Vertragsstaaten: **BE CH DE FR GB IT LI NL**

(56) Entgegenhaltungen: **DE-A- 2 948 708** **US-A- 4 348 454**

(73) Patentinhaber: **Th. Goldschmidt AG, Goldschmidtstrasse 100 Postfach 101461, D-4300 Essen 1(DE)**

(72) Erfinder: **Koerner, Götz, Dr., Kantorie 126, D-4300 Essen(DE)**
Erfinder: **Weitemeyer, Christian, Dr., Sundernholz 67, D-4300 Essen(DE)**
Erfinder: **Wewers, Dietmar, Dr., Fernewaldstrasse 194, D-4250 Bottrop(DE)**
Erfinder: **Jachmann, Jürgen, Berkelstrasse 229, D-4690 Herne 1(DE)**

**EP 0 254 799 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft neue mit (Meth)acrylsäureestern modifizierte Organopolysiloxane sowie ihre Herstellung und die Verwendung dieser Verbindungen als abhäsive Beschichtungsmassen. Dabei soll der Ausdruck (Meth)acrylsäureester sowohl Acrylsäureester wie Methacrylsäureester umfassen.

Mit (Meth)acrylsäureester modifizierte Organopolysiloxane haben sich als mit energiereicher Strahlung härtbare Bindemittel z.B. für Druckfarben und zur Herstellung von Lackbindemitteln oder Beschichtungsmitteln für Papier, Holz- und Metalloberflächen bewährt. Sie können insbesondere als abhäsive Beschichtungsmittel verwendet werden. Die Härtung erfolgt insbesondere nach Zusatz bekannter Initiatoren, wie z.B. Benzophenon und seiner Derivate, durch UV-Strahlung in kürzester Zeit.

Die bekannten (meth)acrylsäureestermodifizierten Polysiloxane unterscheiden sich in der Struktur der gerüstbildenden Polysiloxane, deren Substitution und in den verwendeten acrylatesterhaltigen, an das Siloxangerüst gebundenen organischen Gruppen. Diese können mit dem Gerüst des Organopolysiloxans über SiOC- oder SiC-Bindungen verbunden sein.

Die vorliegende Erfindung betrifft neuartige (Meth)acrylatestergruppen enthaltende Organopolysiloxane, bei denen die (meth)acrylatesterhaltigen organischen Gruppen über eine SiOC-Bindung mit dem Polysiloxangerüst verbunden sind.

Verfahren zur Herstellung solcher Verbindungen und deren Verwendung sind in der Patentliteratur mehrfach beschrieben worden. Zum Stand der Technik wird die DE-PS 27 47 233 genannt. Sie betrifft ein Verfahren zur Herstellung von mit (Meth)acrylsäureestern modifizierten Organopolysiloxanen durch Umsetzung von -COH-Gruppen aufweisenden (Meth)acrylsäureestern mit Organopolysiloxanen, die SiX-Gruppen, (X - Alkoxy, Hydroxyl oder Chlor) aufweisen, gegebenenfalls in Gegenwart von Katalysatoren, mit dem Kennzeichen, daß man als Organopolysiloxane solche der Formel

$$R^1_a\text{-Si-}X_b \atop \quad | \atop \quad O_{\frac{4-(a+b)}{2}}$$

R1= Alkylgruppe mit 1 bis 4 C-Atomen und/oder eine Phenylgruppe;
X = Chlor oder eine OR2-Gruppe;
R2 = Alkylgruppe mit 1 bis 4 C-Atomen und/oder Wasserstoff;
a = 1,0 bis 2,0;
b = 0,02 bis 1.6;
a+b . 2,66;
wobei das Siloxanmolekül 3 bis 100 Si-Atome aufweist und als (Meth)acrylsäureester Pentaerythrittri(meth)-acrylat verwendet, wobei, bezogen auf COH- und SiX-Gruppen, 0.05 Mol bis äquimolare Mengen des Pentaerythritesters eingesetzt werden.

Eine Weiterbildung dieses Verfahrens kann der DE-PS 29 48 708 entnommen werden, wobei das dort beschriebene Verfahren das Kennzeichen aufweist, daß man Organopolysiloxane der Formel

$$R^1_a\text{-Si-}Cl_b \atop \quad | \atop \quad O_{\frac{4-(a+b)}{2}}$$

(R1= Alkyl mit 1 bis 4 Kohlenstoffatomen, Vinyl und/oder Phenyl, mit der Maßgabe, daß mindestens 90 Mol-% der Gruppen R1 Methyl sind; a = Wert von 1,8 bis 2,2; b = Wert von 0,004 bis 0,5) zunächst mit, bezogen auf SiCl-Gruppen, mindestens 2-molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Abhäsive Beschichtungsmassen mit ausgezeichneter Haftung zum Untergrund bei guten abhäsiven Eigenschaften ihrer Oberfläche gegenüber Klebemitteln sind in der DE-PS 34 26 087 beschrieben. Diese Beschichtungsmassen bestehen aus einem äquilibrierten Organopolysiloxan mit im Mittel > 25 bis < 200 Si-Atomen, weiter aus 2 bis 30 Gew.-% Organopolysiloxanen mit im Mittel 2 bis 25 Si-Atomen und aus 2 bis 30 Gew.-% Organopolysiloxanen mit im Mittel 200 bis 2000 Si-Atomen.

Derartige (meth)acrylsäureestermodifizierten Organopolysiloxangemische können insbesondere dadurch hergestellt werden, daß man Organopolysiloxane der allgemeinen Formel

$$R_a\text{-}\underset{\underset{O_{\frac{4-(a+b)}{2}}}{|}}{Si}\text{-}X_b$$

wobei
R ein Alkylrest mit 1 bis 4 C-Atomen, ein Vinylrest und/oder ein Phenylrest,
X ein hydrolysierbarer Rest oder ein Hydroxylrest ist,
a einen Wert von 1,0 bis 2,2,
b einen Wert von 0,001 bis 1,6 hat,
mit Hydroxylgruppen enthaltenden (Meth)acrylsäureestern, vorzugsweise in äquimolaren Mengen, bezogen auf COH- und SiX-Gruppen, umsetzt, wobei man entweder.

a) Organopolysiloxangemische verwendet, welche aus äquilibrierten Organopolysiloxanen mit im Mittel > 25 und < 200 Si-Atomen und weiter aus niedrigermolekularen Organopolysiloxanen mit im Mittel 2 bis 25 Si-Atomen und aus höhermolekularen Organopolysiloxanen mit im Mittel 200 bis 2000 Si-Atomen in solchen Mengen bestehen, daß nach der Umsetzung mit den (Meth)acrylsäureestern die niedrigermolekularen und die höhermolekularen modifizierten Organopolysiloxane jeweils in Mengen von 2 bis 30 Gew.-%, bezogen auf das Gesamtgewicht der Mischung, vorliegen, oder
b) die niedrig-, mittel- und hochmolekularen Organopolysiloxane getrennt umsetzt und die Umsetzungsprodukte in den geforderten Gewichtsverhältnissen mischt.

Der vorliegenden Erfindung liegt die Aufgabe zugrunde, neuartige (meth)acrylsäureestermodifizierte Organopolysiloxane aufzufinden, deren abhäsive Eigenschaften dem gewünschten Anwendungszweck entsprechend angepaßt werden können. Verwendet man beispielsweise abhäsive Beschichtungsmassen zur Beschichtung von Papieren als Trägerbahnen für ablösbare Klebeetiketten, ist eine zu geringe Abhäsivität der Beschichtungsmassen unerwünscht, da dann die Etiketten von diesem Zwischenträger nur schlecht abgelöst werden können. Andererseits muß die Abhäsivität aber niedrig genug sein, damit die abhäsiv beschichteten Papierträger mit den darauf befindlichen Etiketten sicher handhabbar sind und die Etiketten ausreichend auf den beschichteten Oberflächen haften. Eine weitere Aufgabe der Erfindung besteht darin, (meth)acrylsäureestermodifizierte Organopolysiloxane zur Verfügung zu haben, welche möglichst frei von Inhaltstoffen sind, die nicht mit (Meth)acrylsäureestergruppen modifiziert sind und aus der Beschichtungsmasse an deren Oberfläche wandern können. Derartige Bestandteile werden sonst auf die Klebeseite der Etiketten übertragen und beeinträchtigen dort die Klebeeigenschaften solcher Etiketten bei ihrer bestimmungsgemäßen Verwendung.

Es wurde nun gefunden, daß (meth)acrylsäureestermodifizierte Organopolysiloxane die erwünschten modifizierten abhäsiven Eigenschaften aufweisen, wenn sie der allgemeinen Formel

$$(R^1_a R^2_b R^3_c)\text{-}\underset{\underset{O_{\frac{4-(a+b+c+d)}{2}}}{|}}{Si}\text{-}Q_d \qquad \text{I}$$

R1= Methylrest,
R2 = geradkettiger, verzweigter oder cyclischer Alkylrest mit 5 bis 18 Kohlenstoffatomen, der gegebenenfalls mit Halogenresten substituiert ist,
R3 = Aralkylrest der allgemeinen Formel

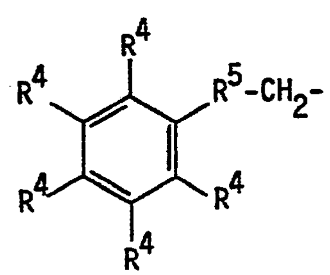

R4 = gleich oder verschieden und Wasserstoff, Alkylrest mit 1 bis 12 Kohlenstoffatomen, Halogenrest,
R5 = geradkettige oder verzweigte Alkylengruppe mit 1 bis 8 Kohlenstoffatomen

Q = um das Wasserstoffatom einer Hydroxylgruppe verminderter mehrfacher (Meth)acrylsäureester das Pentaerythrits, Trimethylolethans, Trimethylolpropans, Glycerins sowie deren Dimere und/oder Oxyalkylenderivate mit 1 bis 10 Oxyethylen- und/oder Oxypropyleneinheiten,

a / 0,9,

b,c = 0 bis 1,1,

b+c / 0,1,

Σ a,b,c = 1,8 bis 2,2,

d = 0,001 bis 1,6,

Σ a,b,c,d . 3,

entsprechen.

Von erfindungswesentlicher Bedeutung ist bei den erfindungsgemäßen neuen Verbindungen die Anwesenheit der Reste $R^2$ und/oder $R^3$.

Der Rest $R^2$ ist ein Alkyrest mit 5 bis 18 Kohlenstoffatomen. Der Alkylrest kann geradkettig, verzweigt oder cyclisch sein, jedoch sind geradkettige Alkylreste bevorzugt. Da man deratige Alkylreste durch Addition von Olefinen an SiH-Gruppen des als Ausgangsverbindung dienenden Siloxans einführt, ist es auch möglich, daß im durchschnittlichen polymeren Molekül Alkylreste unterschiedlicher Kettenlänge enthalten sein können. Der Alkylrest kann mit Halogenresten substituiert sein, wobei Fluorreste bevorzugt sind.

Reste $R^2$ sind zum Beispiel Pentyl-, Hexyl-, Octyl-, Decyl-, Dodecyl-, Cyclopentylethyl-, Cyclohexylethyl-, Cyclohexenylethyl-, Norbornyl-, Perfluoralkylnorbornylreste.

Neben den Resten $R^2$ oder anstelle dieser Reste sind in den neuen erfindungsgemäßen Verbindungen Reste $R^3$ gebunden. Die Reste $R^3$ sind insbesondere β-Phenylethyl-, β-Phenylpropyl-, γ-Phenylpropyl-, o-Methyphenylethyl-, 3,5-Dimethylphenylethyl-, p-Nonylphenylethyl-, o-Bromphenylethyl-, 3,5-Dibromphenylethyl-, p-Chlorphenylethyl-, 3,5-Dichlorphenylethylreste.

Die (Meth)acrylsäureestergruppe ist Bestandteil des Substituenten Q. Dieser Substituent Q ist der um das Wasserstoffatom einer Hydroxylgruppe verminderte mehrfache (Mehr)acrylsäureester eines Polyalkohols, wobei als Polyalkohole Pentaerythrit, Trimethylolethan, Trimethylolpropan und Glycerin in Frage kommen. Von den n Hydroxylfunktionen dieser mehrwertigen Alkohole sind n-1 Hydroxylfunktionen mit (Mehr)acrylsäure verestert. Die verbleibende Hydroxylfunktion dient der Verknüpfung mit dem Organopolysiloxan, so daß der Rest Q mit dem Si-Atom des Polysiloxangerüstes eine SiOC-Brücke ausbildet.

Die vorgenannten partiell veresterten Polyalkohole können auch in Form ihrer Dimeren vorliegen, die durch intermolekulare Kondensation erhältlich sind. Die Polyalkohole Pentaerythrit, Trimethylolethan, Trimethylolpropan und Glycerin und deren Dimere können vor ihrer Veresterung mit (Meth)acrylsäure mit Alkylenoxiden, nämlich Ethylenoxid und/oder Propylenoxid, umgesetzt werden, wobei 1 bis 10 derartiger Oxyethylen- und/oder Oxypropyleneinheiten angelagert sein können.

Der Rest Q kann somit von Pentaerythrittri(meth)acrylat, pentaerythritpenta(meth)acrylat, Trimethylolethandi(meth)acrylat, Ditrimethylolethantri(meth)acrylat, ethylolpropandi(meth)acrylat, Ditrimethylolpropantri(meth)acrylat, Glycerindi(meth)acrylat, Diglycer meth)acrylat oder deren Oxyalkylenethern hergeleitet sein.

Die Indices a, b, c und d bestimmen den Gehalt an siliciumgebundenen Kohlenwasserstoffresten, die Menge an über SiOC gebundenen (Meth)acrylsäureestergruppen sowie den zulässigen Verzweigungsgrad der Organopolysiloxane.

Der Index a gibt die Anzahl der an Si-Atome gebundenen Methylreste an. Mindestens 50 % der an Si-Atome gebundenen Kohlenwasserstoffgruppen müssen Methylreste sein.

Die Indices b und c geben den Gehalt an Resten $R^2$ und $R^3$ an. Je größer die Zahlenwerte der Indices b und c sind, um so größer ist die Anzahl der Gruppen $R^2$ und $R^3$, die für eine gewisse Verträglichkeit der Organopolysiloxane gegenüber kohlenstofforganischen Verbindungen sorgen. Mit steigendem Gehalt an $R^2$- und $R^3$-Gruppen steigt deshalb in gewissem Maße die Verträglichkeit der Beschichtungsmasse mit den organischen Klebstoffen der Klebeetiketten, so daß mit steigendem Gehalt an Gruppen $R^2$ und $R^3$ das Ausmaß der Abhäsivität der erfindungsgemäßen neuen Verbindungen verringert wird.

Die Indices müssen folgende Bedingungen erfüllen: Σ b,c, / 0,1, Σ a,b, c = 1,8 bis 2,2, Σ a,b,c,d . 3.

Die erfindungsgemäßen neuen (meth)acrylsäureestermodifizierten Organopolysiloxane können entsprechend einem weiteren Gegenstand vorliegender Erfindung dadurch hergestellt werden, daß man zunächst Halogen- oder Alkoxywasserstoffpolysiloxane der allgemeinen Formel

$$\left(R^1_a H_{b+c}\right)-\underset{\substack{|\\ O_{\frac{4-(a+b+c+d)}{2}}}}{Si}-X_d \qquad \text{II}$$

$R^1$, a, b, c, d wie oben definiert,

X = Halogen- oder Alkoxyrest mit 2 bis 4 Kohlenstoffatomen,

mit b Mol geradkettigen, verzweigten oder cyclischen Olefinen mit 5 bis 18 Kohlenstoffatomen und/oder c Mol eines aromatischen Kohlenwasserstoffes der allgemeinen Formel

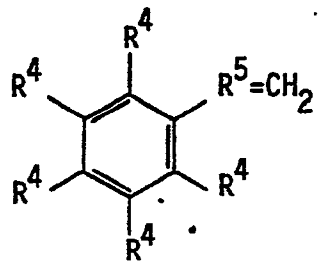

in an sich für die Anlagerung von olefinischen Gruppen an SiH-Gruppen bekannter Weise anlagert und dann das erhaltene Produkt der allgemeinen Formel

$$(R^1_aR^2_bR^3_c)-\underset{\displaystyle O_{\frac{4-(a+b+c)}{2}}}{\underset{|}{Si}}-X_d \qquad III$$

mit mindestens d Mol (Meth)acrylsäureester der Formel Q-H, Q wie oben definiert, in an sich bekannter Weise umsetzt.

Das erfindungsgemäße Verfahren weist somit zwei Stufen auf:

In einer ersten Stufe werden zunächst an Halogen- oder Alkoxywasserstoffpolysiloxane der allgemeinen Formel II Olefine mit 5 bis 18 Kohlenstoffatomen und/oder aromatische Kohlenwasserstoffe mit einer Alkenylgruppe angelagert. Die Anlagerung erfolgt in der Weise, wie sie für die Anlagerung von Verbindungen mit olefinischen Gruppen an SiH-Gruppen bekannt ist. Derartige Anlagerungen werden entsprechend dem Stand der Technik im allgemeinen in Gegenwart von Platinkatalysatoren, z.B. H@PtCl^, und bei gegebenenfalls erhöhter Temperatur bis etwa 150°C durchgeführt.

Als Olefine sind α-Olefine bevorzugt, wobei auch im Handel befindliche α-Olefingemische, soweit sie die Bedingung der Kohlenstoffanzahl erfüllen, verwendet werden können. Als aromatische Kohlenwasserstoffe mit einer Alkenylgruppe kommen insbesondere Styrol, α-Methylstyrol, Allylbenzol oder p-Bromstyrol in Frage.

In einer zweiten Verfahrensstufe werden die erhaltenen Zwischenprodukte der Formel III mit mindestens d Mol (Meth)acrylsäureester der Formel Q-H in ebenfalls bekannter Weist umgesetzt. Die Umsetzung kann dabei entsprechend dem in der DE-PS 27 47 233 geschilderten Verfahren erfolgen. Dabei werden zweckmäßig Katalysatoren, wie z.B. Titansäureester, Isopropyl- oder -butyltitanat, eingesetzt, und es werden erhöhte Temperaturen, insbesondere Temperaturen von 120 bis 150°C, für die Umsetzung eingehalten. Zweckmäßig werden Polymerisationsinhibitoren, wie z.B. Hydrochinon, zugesetzt. Ist der Rest X ein Halogenrest, wird der entsprechende Halogenwasserstoff zweckmäßig durch Einleiten von Ammoniak oder Zugabe von Alkalien, wie z.B. Natriumcarbonat, neutralisiert. Ist X ein Alkoxyrest mit 2 bis 4 Kohlenstoffatomen, entweicht bei den Reaktionstemperaturen der freigesetzte niedere Alkohol aus dem Reaktionsgemisch.

Es ist bereits ausgeführt worden, daß eine weitere Aufgabe der Erfindung darin besteht, (meth)acrylsäureestermodifizierte Polysiloxane aufzufinden, welche keine Anteile enthalten, die nicht mit (Meth)acrylsäureestergruppen modifiziert sind und im modifizierten Organopolysiloxan verteilt die Eigenschaft haben, aus den Beschichtungsmassen zu migrieren, sich an der Oberfläche anzureichern und die abhäsiven Eigenschaften der Beschichtungsmasse bzw. die Klebeeigenschaften der auf der abhäsiven Schicht befindlichen Produkte nachteilig zu beeinflussen. Die Beschichtungsmassen sollen nach Möglichkeit frei von derartigen inerten Bestandteilen sein.

In einer bevorzugten Ausgestaltungsform des erfindungsgemäßen Verfahrens wurde nun gefunden, daß man derartige von inerten Bestandteilen im wesentlichen freie Produkte erhält, wenn man Halogenwasserstoffpolysiloxane der allgemeinen Formel II für die Umsetzung in der ersten Stufe auswählt, welche höchstens 4 Gew.-%, vorzugsweise weniger als 2 Gew.-%, bei 130°C/30 mbar flüchtige Anteile enthalten. Dies kann dadurch erreicht werden, daß man die für die Umsetzung bestimmten Halogenwasserstoffsiloxane der Formel II bei einer Temperatur von 130 bis 150°C und einem Druck . 30 mbar durch Destillation weitgehend von den flüchtigen Anteilen befreit. Dabei werden insbesondere cyclische Siloxane mit 3 bis 8 Si-Atomen entfernt.

Der bevorzugte Einsatz der erfindungsgemäßen Verbindungen besteht in ihrer Verwendung als Beschichtungsmaterialien mit abhäsiven Eigenschaften. Dabei können die erfindungsgemäßen Organopolysiloxane allein oder in Mischung mit anderen zur Copolymerisation befähigten, ungesättigten Verbindungen, wie z.B. mono-, oligo- oder polymeren Epoxy-, Ether-, Ester- oder Urethanacrylaten und -methacrylaten, Estern ungesättigter Dicarbonsäuren, Allylestern sowie anderen vinylischen Verbindungen, wie Vinylaromaten oder Vinyllactamen, verwendet werden.

Es ist bei Härtung durch ultraviolette Strahlung notwendig, diesen Gemischen einen Radikalstarter, vorzugsweise in Mengen von 2 bis 10 Gew.-%, bezogen auf modifiziertes Siloxan, zuzusetzen. Die Wahl des Radikalstarters kann entsprechend dem Wellenlängenspektrum der zur Aushärtung verwendeten UV-Strahlenquelle erfolgen. Derartige Radikalstarter sind bekannt. Man kann z.B. Benzophenon, dessen Oxime oder Benzoinether, jedoch auch andere hierfür bekannte Verbindungen verwenden. Auch die Mitverwendung von Aminen, die die Aushärtung in Gegenwart von Luftsauerstoff beschleunigen sollen, ist gebräuchlich. Ohne Zusatz von Initiatoren lassen sich die erfindungsgemäßen Organopolysiloxane z.B. durch Laserlicht, Elektronenstrahlen, γ-Strahlen aushärten.

Weitere mitverwendbare Modifizierungsmittel sind in der DE-AS 26 02 809 und DE-OS 32 18 675 genannt.

Außerdem können auch Feststoffe zugesetzt werden, um die Viskosität oder die Oberfläche zu verändern. Dazu gehören insbesondere hochdisperse Kieselsäuren oder organische Polymerisate aus Fluorkohlenwasserstoffen u.a.

In den folgenden Beispielen wird die Herstellung der erfindungsgemäßen Verbindungen gezeigt, und es werden die Eigenschaften der hieraus hergestellten strahlungsgehärteten, abhäsiven Beschichtungsmassen dargestellt.

<u>Beispiel 1</u>

Herstellung von α,ω-Di-(pentaerythrittriacrylat)-polydimethyl-(hexylmethyl)-(m-bromphenylethyl-methyl)siloxan der mittleren Formel

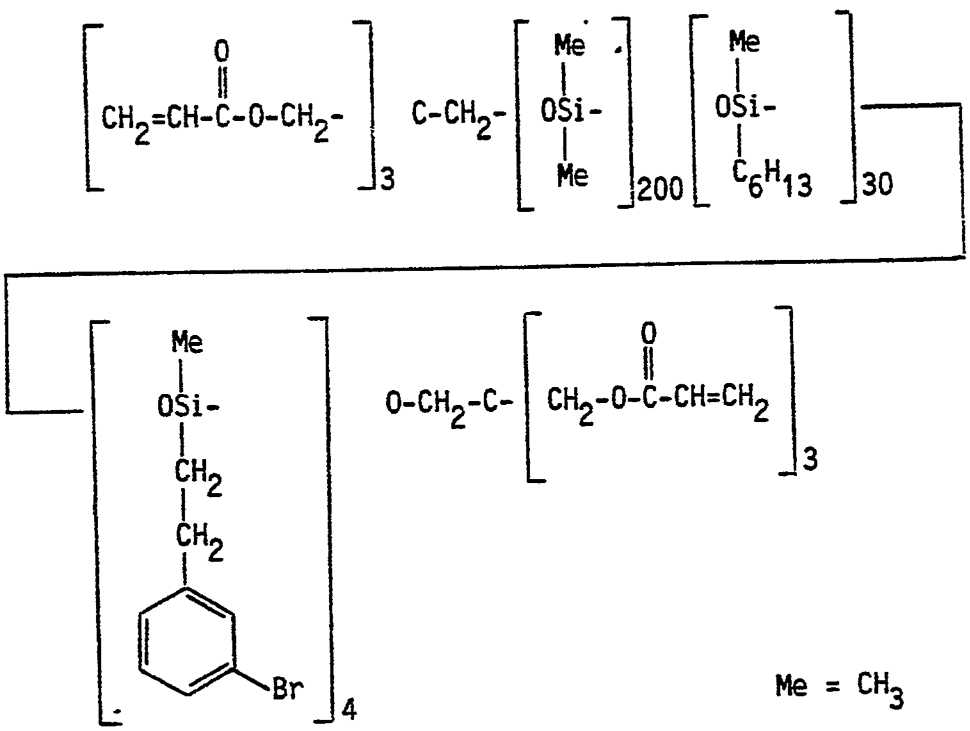

Me = $CH_3$

1. Verfahrensstufe

In einem 500 ml 4-Halskolben, ausgestattet mit einem Rückflußkühler mit CaCo#-Trockenrohr, Thermometer, Tropftrichter, Magnetrührer und Heizbad, werden 150 g eines α,ω-Dichlorpolymethylhydrogensiloxans der durchschnittlichen Formel
Cl-(SiMe@O)! (-(SiHMeO)#$SiMe@Cl,
120 g Toluol und 5 ml einer Lösung von 4 mg H@PtCl^ · H@O in 3 ml Glykoldimethylether vorgelegt und auf 90°C erwärmt. Unter Rühren werden nacheinander 6,8 g m-Bromstyrol (95 %ig, 36 mMol) und 22,6 g 1-Hexen (99 %ig, 266 mMol) während 1 Stunde so zugetropft, daß die Temperatur 110°C nicht übersteigt.

Nach beendeter Zugabe wird noch 3 Stunden bei 100°C gerührt. Danach werden bei 5 mbar und 80°C Kolbentemperatur die flüchtigen Anteile entfernt.
Ausbeute: 170,0 g (95,0 % der Theorie)

2. Verfahrensstufe

Zu 200,0 g Toluol werden 3,3 g Di-isopropylamin (32 mMol) gegeben, sodann bei 70°C 150,0 g des in der 1. Verfahrensstufe isolierten Chlorsiloxans zugetropft und danach 1 Stunde bei dieser Temperatur gerührt. Anschließend wird als Inhibitor 0,2 g Kupferpulver zugesetzt. Danach werden 4,4 g (15 mMol) Pentaerythrittriacrylat zugetropft und 40 Minuten nachgerührt. Der entstandene Niederschlag wird abfiltriert und das Filtrat erneut mit 0,2 g Kupferpulver versetzt. Das Lösungsmittel wird im Wasserstrahlvakuum bis zu einer maximalen Sumpftemperatur von 80°C abdestilliert. Zum Schluß erfolgt eine Druckfiltration über eine Presse.
Ausbeute: 143,1 g

Beispiel 2

Herstellung von α,ω-Di(pentaerythrittiacrylat)-polydimethyl-(2-phenylpropyl-methyl)siloxan der mittleren Formel

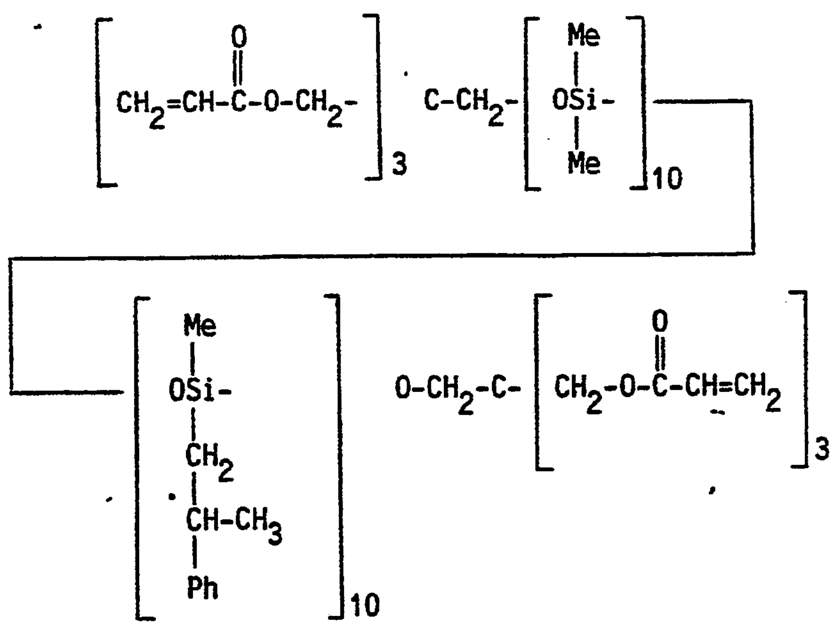

1. Verfahrensstufe

In einer im Beispiel 1 beschriebenen Apparatur werden 100,0 g eines α,ω-Dimethoxy-polydimethylhydrogensiloxans der durchschnittlichen Formel
Me(OSiMe@)! }(OSiHMe)! }OMe,
100,0 g Toluol und 5 ml der im Beispiel 1 beschriebenen Katalysatorlösung vorgelegt und auf 90°C erwärmt. Unter Rühren 87,0 g α-Methylstyrol (98 %ig, 722 mMol) während 1 Stunde zugetropft. Nach beendeter Zugabe wird noch 5 Stunden bei 100°C gerührt. Bei 5 mbar und 80°C werden die flüchtigen Anteile entfernt.
Ausbeute: 180,7g (97,5 % der Theorie)

2. Verfahrensstufe

150,0 g des in der 1. Verfahrensstufe hergestellten Siloxans, 38,4 g Pentaerythrittriacrylat, 0,06 g Hydrochinon und 0,11 g Butyltitanat werden in einem Kolben vorgelegt und aufgeheizt. Während der Reaktion wird in das Reaktionsgemisch Luft eingeleitet. Die Reaktion verläuft bei 135 bis 140°C, dauert 1,5 Stunden und unterdessen wird das entstandene Methanol abdestilliert. Das filtrierte Produkt ist klar, gelblich.
Ausbeute: 113,2 g

Beispiel 3

Herstellung eines verzweigten Trimethylolpropandiacrylat-funktionellen Polysiloxans der mittleren Formel

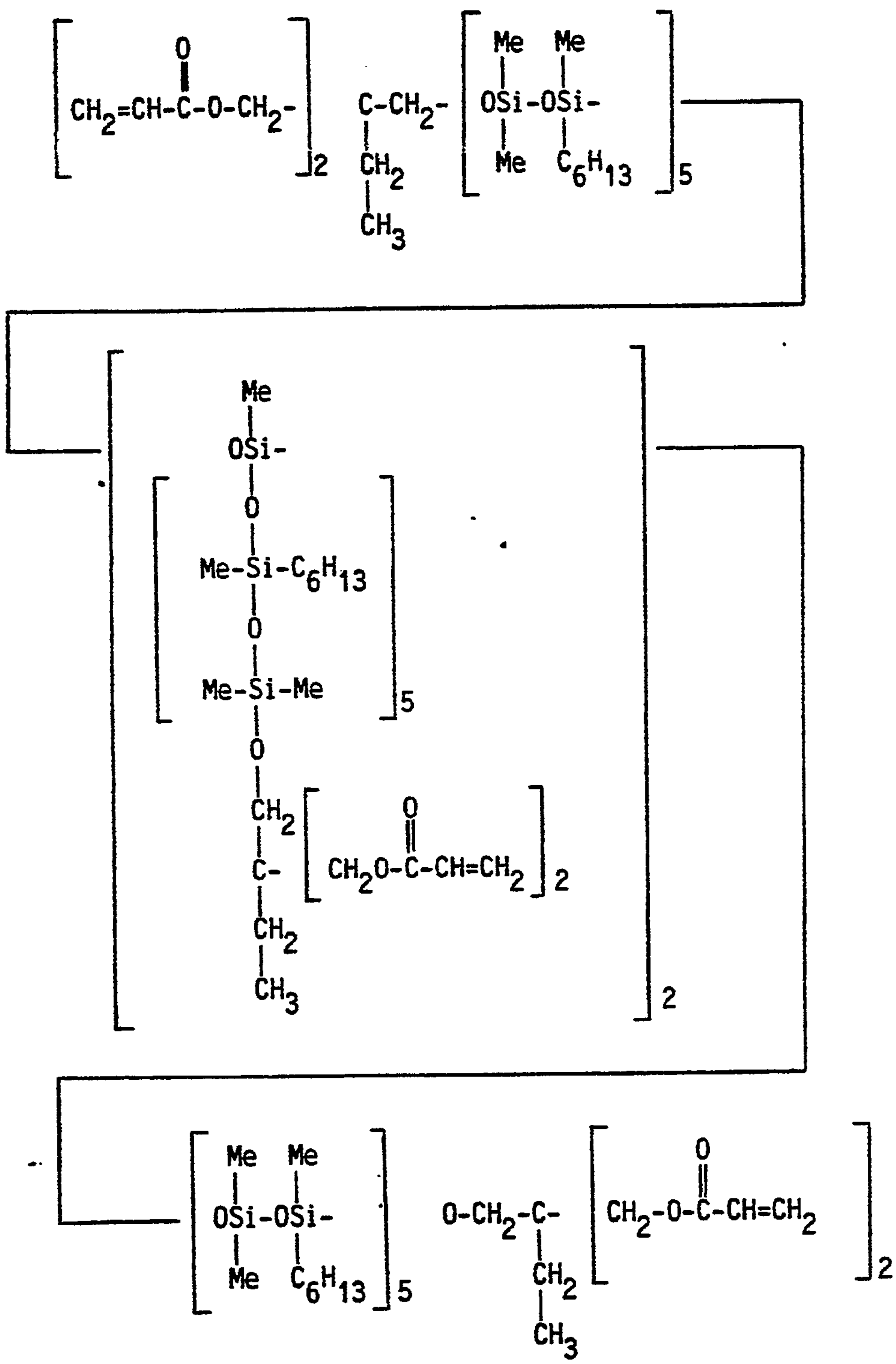

1. Verfahrensstufe

In einer im Beispiel 1 beschriebenen Apparatur werden analog 100,0 g eines Si-Cl-funktionellen Polymethylhydrogensiloxans der durchschnittlichen Formel

$$(Me)_{1,48}(H)_{0,47}\underset{\substack{|\\O_{0,98}}}{Si}-Cl_{0,095}$$

mit 58,1 g 1-Hexen (99 %ig, 684 mMol) umgesetzt und aufgearbeitet.
Ausbeute: 152,2 g (96,6 % der Theorie)

2. Verfahrensstufe

Analog zu der in Beispiel 1 beschriebenen 2. Verfahrensstufe werden 150,0 g verzweigtes Chlorsiloxan der durchschnittlichen Formel

$$(Me)_{1,48}(C_6H_{13})_{0,47}\underset{\substack{|\\O_{0,98}}}{Si}-Cl_{0,095}$$

in 100,0 g Toluol unter Verwendung von 29,0 g Di-isopropylamin und 0,3 g Kupferpulver mit 31,5 g Trimethylolpropandiacrylat zur Reaktion gebracht. Nach analoger Aufarbeitung werden 143,9 g Produkt erhalten.

Beispiel 4

Herstellung eines Glycerindiacrylat mit 1,5 Oxypropyleneinheiten funktionellen Polydimethyl-(perfluorhexylnorbornyl-methyl)-(dodecyl-methyl)siloxans der mittleren Formel

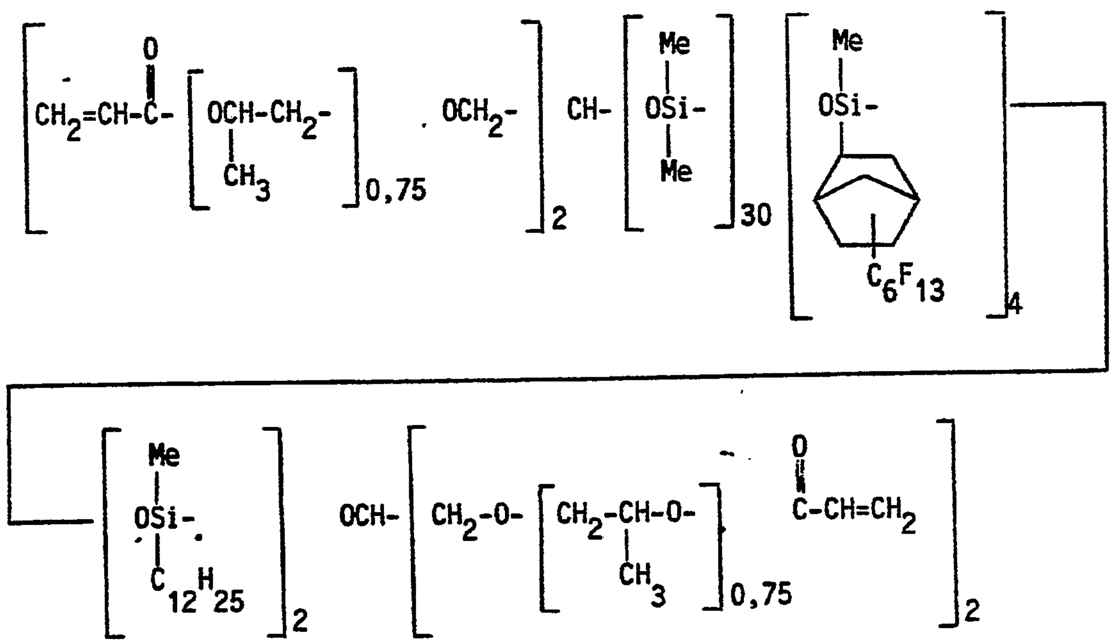

1. Verfahrensstufe

In einer im Beispiel 1 beschriebenen Apparatur werden 100,0 g eines α,ω-Dichlorpolymethylhydrogensiloxans der mittleren Formel

$$Cl-\left[SiMe_2O-\right]_{29}\left[SiHMeO-\right]_6\ SiMe_2Cl\ ,$$

100,0 g Toluol und 5 ml der im Beispiel 1 beschriebenen Katalysatorlösung vorgelegt und auf 80°C erwärmt. Unter Rühren werden 63,0 g Perfluorhexylnorbornen-2 (99,2 %ig, 152 mMol) und 14,0 Dodecen-1 (83 mMol) innerhalb von 1 Stunde bei 90°C nacheinander zugetropft. Nach beendeter Zugabe wird noch 5 Stunden bei gleicher Temperatur gerührt, und anschließend werden die flüchtigen Anteile bei 5 mbar abdestilliert.
Ausbeute: 172,4 g (98,3 % der Theorie)

2. Verfahrensstufe

Analog zu der im Beispiel 1 beschriebenen 2. Verfahrensstufe werden 150,0 g Chlorsiloxan in 150,0 g Toluol unter Verwendung von 14,4 g Diisopropylamin und 0,3 g Kupferpulver mit 18,6 g Glycerindiacrylat mit 1,5 Oxypropyleneinheiten zu Reaktion gebracht. Nach analoger Aufarbeitung werden 128,9 g Produkt erhalten.

Zur Überprüfung der anwendungstechnischen Eigenschaften wird das α,ω-Di-(pentaerythrittriacrylat)-polydimethyl-(2-phenylpropylmethyl)-siloxan (Beispiel 2) mit zwei α,ω-Pentaerythrittriacrylat-funktionellen Polydimethylsiloxanen, die dem Stand der Technik entsprechen, verglichen. Dazu werden die Siloxane auf satiniertes Papier aufgebracht und bei 1,5 Mrad durch Elektronenstrahlen gehärtet. Die Auftragsmenge beträgt 1,1 g/m2.

Zur Messung der Abhäsivität werden 30 mm breite Klebebänder aufgewalzt und anschließend bei 70°C gelagert. Nach 24 Stunden wird die Kraft gemessen, die benötigt wird, um das Klebeband unter einem Schälwinkel von 180° vom Untergrund abzuziehen. Diese Kraft wird als Trennkraft bezeichnet.

| Anzahl der Si-Atome im durchschnittlichen Molekül | erfindungsgemäß | Trennkraft [N] | |
|---|---|---|---|
| | | Kautschukkleber | Acrylatkleber |
| 16 | nein | 3,4 | 3,8 |
| 73 | nein | 0,15 | 0,31 |
| 20 | ja | 8,3 | 17,0 |

Aus der Tabelle ergibt sich, daß durch eine geeignete Substitution der Methylgruppen durch geeignete Gruppen (R2 bzw. R3) die abhäsiven Eigenschaften dem gewünschten Anwendungszweck entsprechend angepaßt werden können.

**Patentansprüche**

1. Verbindungen der allgemeinen Formel

$$(R^1_aR^2_bR^3_c)-\underset{\substack{|\\ O_{\frac{4-(a+b+c+d)}{2}}}}{Si}-Q_d$$

R1= Methylrest,
R2 = geradkettiger, verzweigter oder cyclischer Alkylrest mit 5 bis 18 Kohlenstoffatomen, der gegebenenfalls mit Halogenresten substituiert ist,
R3 = Aralkylrest der allgemeinen Formel

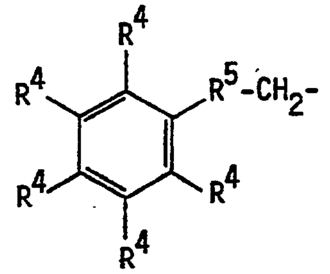

R4 = gleich oder verschieden und Wasserstoffrest, Alkylrest mit 1 bis 2 Kohenstoffatomen, Halogenrest,
R5 = geradkettige oder verzweigte Alkylengruppe mit 1 bis 8 Kohlenstoffatomen,
Q = um das Wasserstoffatom einer Hydroxylgruppe verminderter mehrfacher (Meth)acrylsäureester des Pentaerythrits, Trimethylolethans, Trimethylolpropans, Glycerins sowie deren Dimere und/oder Oxyalkylenderivate mit 1 bis 10 Oxyethylen- und/oder Oxypropyleneinheiten,
a / 0,9, sowie mindestens 50% (a+b+c)
b,c = 0 bis 1,1,
b+c / 0,1,
Σ a,b,c = 1,8 bis 2,2,
d = 0,001 bis 1,6,
Σ a,b,c,d . 3.

2. Verfahren zur Herstellung von Verbindungen des Patentanspruchs 1, dadurch gekennzeichnet, daß man zunächst Halogen- oder Alkoxywasserstoffpolysiloxane der allgemeinen Formel

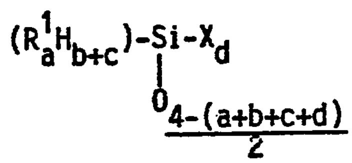

R1, a, b, c, d wie oben definiert,
X = Halogen- oder Alkoxyrest mit 2 bis 4 Kohlenstoffatomen,
mit b Mol geradkettigen, verzweigten oder cyclischen Olefinen mit 5 bis 18 Kohlenstoffatomen und/oder c Mol eines aromatischen Kohlenwasserstoffes der allgemeinen Formel

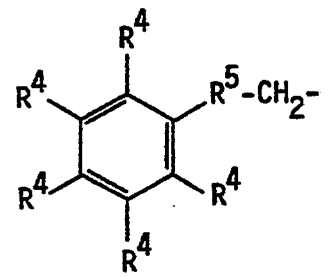

in an sich für die Anlagerung von olefinischen Gruppen an SiH-Gruppen bekannter Weise anlagert und dann das erhaltene Produkt der allgemeinen Formel

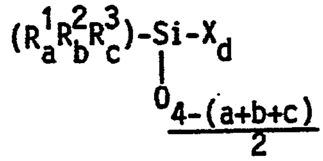

mit mindestens d Mol (Meth)acrylsäureester der Formel Q-H, Q wie oben definiert umsetzt.

3. Verfahren nach Anspruch 2, dadurch gekennzeichnet, daß man Halogenwasserstoffpolysiloxane umsetzt, welche höchstens 4 Gew.-% bei 130°C/30 mbar flüchtige Anteile enthalten.

4. Verfahren nach Anspruch 2 oder 3, dadurch gekennzeichnet, daß man als (Meth)acrylsäureester Q-H Pentaerythrittri(meth)acrylat, Trimethylolethandi(meth)acrylat, Trimethylolpropandi(meth)acrylat,

Glycerindi(meth)acrylat, deren Dimere und/oder deren Oxyalkylenderivate mit 1 bis 10 Oxyethylen- und/oder Oxypropyleneinheiten einsetzt.

5. Verfahren nach einem oder mehreren der Ansprüche 2 bis 4, dadurch gekennzeichnet, daß man Siloxane einsetzt, deren Rest R3 ein gegebenenfalls halogen- oder alkylsubstituierter Phenylethyl- oder Phenylpropylrest ist.

6. Verwendung der Verbindungen des Anspruchs 1 als abhäsive Beschichtungsmassen oder als Vergußmassen für elektronische Bauteile.

**Revendications**

1. Composés de formule générale

$$(R^1_a R^2_b R^3_c)\text{-}\underset{\underset{O_{\frac{4-(a+b+c+d)}{2}}}{|}}{Si}\text{-}Q_d$$

dans laquelle

R1 est un groupe méthyle,

R2 est un groupe alcoyle linéaire, ramifié ou cyclique, contenant de 5 à 18 atomes de carbone, qui est substitué le cas échéant par des groupes halogène,

R3 est un groupe aralcoyle, répondant à la formule:

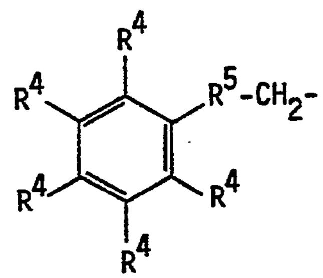

où

R4 sont des groupes identiques ou différents, et un groupe hydrogène, un groupe alcoyle contenant de 1 à 12 atomes de carbone, un groupe halogène,

R5 est un groupe alcoylène linéaire ou ramifié, contenant de 1 à 8 atomes de carbone.

Q représente un groupe hydroxyle déshydrogéné d'un ester (méth)acrylique multiple de pentaérythrite, de triméthylol-éthane, de triméthylolpropane, de glycérol ainsi que leurs dimères et/ou leurs dérivés d'oxyalcoylène contenant de 1 à 10 unités d'oxyéthylène et/ou d'oxypropylène,

$a \geq 0,9$ et représente au moins 50% de $(a + b + c)$,

$b,c = 0$ à $1,1$,

$b + c \geq 0,1$,

$a + b + c = 1,8$ à $2,2$,

$d = 0,001$ à $1,6$,

$a + b + c + d \leq 3$.

2. Procédé de préparation de composés selon la revendication 1, caractérisé en ce qu'on transforme d'abord, d'une manière connue en soi quant à l'addition de groupes oléfiniques à des groupes –SiH, des halogénohydropolysiloxanes ou des alcoxyhydropolysiloxanes de formule générale

$$(R^1_a H_{b+c})\text{-}\underset{\underset{O_{\frac{4-(a+b+c+d)}{2}}}{|}}{Si}\text{-}X_d$$

dans laquelle R1, a, b, c, d sont définis comme précédemment et X représente un groupe halogène ou alcoxy contenant de 2 à 4 atomes de carbone,

en les faisant réagir avec b. moles d'oléfines linéaires, ramifiées ou cycliques, contenant de 5 à 18 atomes de carbone et/ou avec c.moles d'un hydrocarbure aromatique répondant à la formule générale

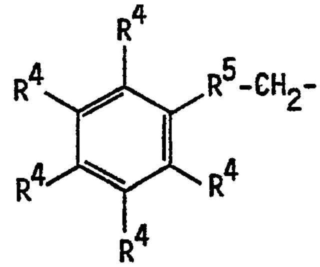

et en ce qu'on fait réagir ensuite le produit obtenu, répondant à la formule

$$(R^1_a R^2_b R^3_c)\text{-}\underset{\underset{O_{\frac{4-(a+b+c)}{2}}}{|}}{Si}\text{-}X_d$$

avec au moins d.moles d'ester (méth)acrylique répondant à la formule Q–H, dans laquelle Q est défini comme précédemment.

3. Procédé suivant la revendication 2, caractérisé en ce qu'on fait réagir des halogénohydropolysiloxanes qui contiennent au maximum 4% en poids de composants volatils à 130°C/30 millibars.

4. Procédé suivant la revendication 2 ou 3, caractérisé en ce qu'on utilise comme esters (méth)acryliques Q–H un tri(méth)acrylate de pentaérythrite, un di(méth)acrylate de triméthylol-éthane, un di(méth)acrylate de triméthylol-propane, un di(méth)acrylate de glycérol, leurs dimères et/ou leurs dérivés d'oxyalcoylène contenant de 1 à 10 unités d'oxyéthylène et/ou d'oxypropylène.

5. Procédé suivant l'une ou plusieurs des revendications 2 à 4, caractérisé en ce qu'on met en œuvre des siloxanes dont le groupe R3 est, le cas échéant, un groupe phényléthyle ou phénylpropyle substitué par un (des) halogène(s) ou un (des) alcoyle(s).

6. Utilisation des composés selon la revendication 1 en tant que matériaux de revêtement anti-adhésifs ou en tant que matériaux de remplissage pour des pièces de construction électroniques.

**Claims**

1. Compounds of the general formula

$$(R^1_a R^2_b R^3_c)\text{-}\underset{\underset{O_{\frac{4-(a+b+c+d)}{2}}}{|}}{Si}\text{-}Q_d \,.$$

in which

R1= a methyl radical,

R2 = a straight-chain, branched or cyclic alkyl radical having 5 to 18 carbon atoms, which may be, substituted by halogen radicals,

R3 = an aralkyl radical of the general formula

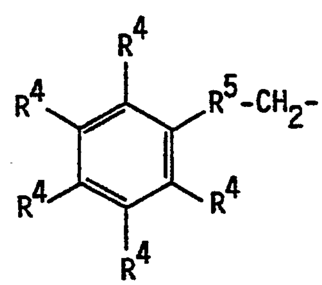

R4 = identical or different and a hydrogen radical, an alkyl radical having 1 to 12 carbon atoms, or a halogen radical,

R5 = a straight-chain or branched alkylene group having 1 to 8 carbon atoms,

Q = a multiple (meth)acrylate of pentaerythritol, trimethylolethane, trimethylolpropane, glycerol and of

their dimers and/or oxyalkylene derivatives having 1 to 10 oxyethylene and/or oxypropylene units, in each case minus the hydrogen atom of a hydroxyl group,

$a \geq 0.9$, and is at least 50% of $(a + b + c)$

$b,c = 0$ to $1.1$,

$b + c \geq 0.1$,

$\Sigma$ a, b, c = 1.8 to 2.2,

$d = 0.001$ to $1.6$,

$\Sigma$ a, b, c, d $\leq 3$.

2. Process for the preparation of compounds of Claim 1, characterized in that initially halogeno- or alkoxy-hydrogen polysiloxanes of the general formula

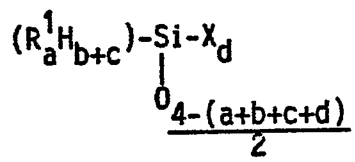

in which R1, a, b, c, d are as defined above, X = a halogen radical or alkoxy radical having 2 to 4 carbon atoms, are brought into an addition reaction with b mol of straight-chain, branched or cyclic olefines having 5 to 18 carbon atoms and/or c mol of an aromatic hydrogen carbon of the general formula

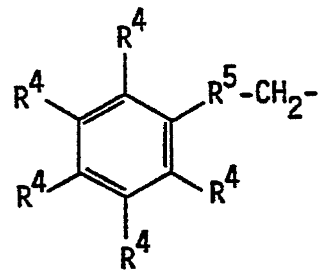

in a manner known per se for the addition of olefinic groups to SiH groups and the product obtained of the general formula

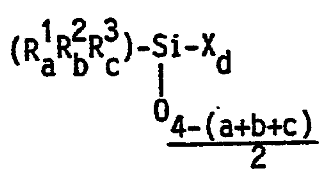

is reacted wtih at least d mol of (meth)acrylate of the formula Q–H, Q being defined as above.

3. Process according to Claim 2, characterized in that the halogenohydrogenpolysiloxane which is reached contains a maximum of 4% by weight of components which are volatile at 130°C/30 mbar are reacted.

4. Process according to Claim 2 or 3, characterized in that the (meth)acrylate Q–H is pentaerythritol tri(meth)acrylate, trimethylolethane di(meth)acrylate, trimethylolpropane di(meth)acrylate, glycerol-di(meth)acrylate, their dimers and/or their oxyalkylene derivatives having 1 to 10 oxyethylene and/or oxypropylene units.

5. Process according to one or more of Claims 2 to 4, characterized in that in the siloxane used R3 is an unsubstituted or halogen – or alkyl-substituted phenylethyl or phenylpropyl radical.

6. The use of the compounds of Claim 1 as non-stick coating compositions or as encapsulating compositions for electronic components.